# EUROPÄISCHE PATENTSCHRIFT

(11) **EP 2 420 403 B1**
(45) Veröffentlichungstag und Bekanntmachung des Hinweises auf die Patenterteilung: **03.04.2013**
(21) Anmeldenummer: 11006684.2
(22) Anmeldetag: 16.08.2011
(51) Int. Cl.: B60N 2/225

(54) **Verstelleinrichtung für Fahrzeugsitz, insbesondere zum Einstellen der Lehnenneigung**
Adjustment device for vehicle seat, in particular for adjusting the backrest angle
Dispositif de réglage pour siège de véhicule, notamment pour le réglage de l'inclinaison d'un dossier

(30) Priorität: 16.08.2010 DE 102010034504; 20.04.2011 DE 102011018338
(43) Veröffentlichungstag der Anmeldung: 22.02.2012
(73) Patentinhaber: Johnson Controls GmbH, 51399 Burscheid (DE)
(72) Erfinder: Labuwy, Cornel, 42857 Remscheid (DE); Zynda, Martin, 51399 Burscheid (DE); Kienke, Ingo, 42929 Wermelskirchen (DE); Finner, Holger, 42499 Hückeswagen (DE); Moog, Michael, 42697 Solingen (DE)
(74) Vertreter: Wolff, Felix

(56) Entgegenhaltungen:
- WO-A2-2006/040303
- DE-A1- 2 448 659
- DE-A1- 3 705 668
- FR-A5- 2 038 803
- US-A- 4 504 091

## Beschreibung

Die vorliegende Erfindung betrifft eine kontinuierlich arbeitende Verstelleinrichtung für einen Fahrzeugsitz, insbesondere zum Einstellen der Lehnenneigung, mit einem innenverzahnten äußeren Zahnrad, einem außenverzahnten inneren Zahnrad und einem Antriebsmittel, das zur Komfortverstellung ein Zahnrad relativ zu dem anderen Zahnrad gegen einen Verstellwiderstand dreht.

Verstelleinrichtungen der eingangs genannten Art sind beispielweise aus der
Patentanmeldung WO 2006/040303 A2 bekannt. Hinsichtlich des grundsätzlichen Aufbaus und der Funktion derartiger Verstelleinrichtungen wird beispielsweise auf diese Schrift verwiesen. Die Verstellung dieser Verstelleinrichtungen über einen großen Winkelbereich erfordert aber relativ viel Zeit. Eine weitere, dem Oberbegriff des Anspruchs 1 entsprechende Verstelleinrichtung ist z.B. aus der DE-24 48 659 A1 bekannt.

Der Erfindung liegt deshalb die Aufgabe zugrunde, für diese Verstelleinrichtungen auch eine Schnellverstellung bzws eine zur o.f., gattungsbildenden DE 24 48 659 A1 alternative Schnellverstellung bereitzustellen.

Gelöst wird die Aufgabe mit einer Verstelleinrichtung für einen Fahrzeugsitz, insbesondere zum Verstellen der Neigung der Rückenlehne relativ zu einem Sitzteil, mit den Kennzeichnenden Merkmalen des Anspruchs 1.

Weiterbildungen der Erfindung sind in den abhängigen Ansprüchen angegeben.

Die vorliegende Erfindung betrifft eine Verstelleinrichtung eines Fahrzeugsitzes. Der Fahrzeugsitz weist eine Rückenlehne und ein Sitzteil auf, wobei die Rückenlehne beispielsweise für eine Komfortverstellung, für einen vereinfachten Einstieg und/oder um die Rückenlehne als Ladefläche zu nutzen, relativ zu dem Sitzteil drehbar, vorgesehen ist. Während die Stellung der Rückenlehne bei der Komfortverstellung nur in einem vergleichsweise kleinen Winkelbereich verstellt wird, muss für die anderen Funktionen, d.h. dem vereinfachten Einstieg oder die Nutzung der Rückenlehne als Ladefläche ein vergleichsweise großer Winkelbereich überbrückt werden. Die Verstellvorrichtung kann jedoch auch für andere Funktionen an dem Fahrzeugsitz eingesetzt werden, insbesondere bei Funktionen, bei denen eine Komfort- und eine Schnellverstellung zweckmäßig sind. Ein Beispiel für eine mögliche Anwendung ist eine Höhen- oder Neigungsverstellung des Sitzteils des Fahrzeugsitzes.

Die Verstellung im Komfortbereich erfolgt mit einem innenverzahnten äußeren Zahnrad, einem außenverzahnten inneren Zahnrad und einem Antriebsmittel, das eines der beiden Zahnräder relativ zu dem anderen Zahnrad gegen einen Verstellwiderstand dreht. Der Antrieb kann motorisch oder manuell vorgesehen sein, wobei ein manueller Antrieb bevorzugt ist. Derartige Verstelleinrichtungen sind beispielsweise als sogenannte "Recliner" bekannt. Beispielsweise ist eine solche Verstelleinrichtung in der o.g. WO 2006/040303 A2 beschrieben. Zur Verstellung muss der Verstellwiderstand, der vorzugsweise ein Bauteil eines Fahrzeugsitzes, beispielsweise die Rückenlehne in ihrer jeweiligen Position sichert, überwunden werden.

Erfindungsgemäß ist nun vorgesehen, dass dieser Verstellwiderstand für eine Schnellverstellung, d.h. insbesondere bei einer Verstellung in einem großen Winkelbereich, temporär reduzierbar, vorzugsweise zumindest fast vollständig reduzierbar ist. Dadurch kann ein Bauteil des Fahrzeugsitzes, insbesondere die Rückenlehne, vorzugsweise von Hand, sehr schnell und/oder mit einem geringen Kraftaufwand über einen großen Winkelbereich verstellt werden. Beispielsweise kann die Rückenlehne durch die Schnellverstellung von einer im Wesentlichen vertikalen Gebrauchsstellung in eine im Wesentlichen horizontale Verstau- oder Schlafstellung gebracht werden.

Erfindungsgemäß wirkt das Antriebsmittel form- und/oder kraftschlüssig, insbesondere reibschlüssig, mit einem der Zahnräder drehmomentübertragend zusammen, insbesondere um die Komfortverstellung zu bewirken und/oder um ein Bauteil des Fahrzeugsitzes, beispielsweise die Rückenlehne in einer gewünschten Stellung zu halten. Erfindungsgemäß wird dieser Form- und/oder Kraftschluss, insbesondere der Reibschluss, für die Schnellverstellung zumindest reduziert bzw. ist das Zahnrad, das Antriebsmittel und/oder ein Bremsmittel von einem Bauteil der Verstelleinrichtung mit dem es, insbesondere zur Komfortverstellung, in Eingriff steht, insbesondere zur temporären Reduzierung des Verstellwiderstands, reversibel trennbar vorgesehen. Besonders bevorzugt wird die Schnellverstellung vollständig aufgehoben. Dies kann beispielsweise dadurch erfolgen, dass das Antriebsmittel, beispielsweise ein Exzenter, außer Eingriff mit dem inneren Zahnrad bringbar ist, vorzugsweise durch lineares Verschieben des Exzenters entlang einer Achse, beispielsweise der Drehachse, der Verstelleinrichtung aus der Wirkverbindung mit dem inneren Zahnrad hinaus. Dies kann durch ein axiales Verschieben des Antriebsmittels gegenüber dem, vorzugsweise am Ort verbleibenden, inneren Zahnrad und/oder durch ein Verschieben des inneren Zahnrads gegenüber dem vorzugsweise am Ort verbleibenden Antriebsmittel geschehen. Die jeweilige Verschiebung kann auch in einem Winkel, vorzugsweise in einem rechten Winkel zu einer Achse der Verstelleinrichtung, insbesondere der Drehachse, erfolgen. Alternativ oder zusätzlich ist das innere Zahnrad außer Eingriff mit dem äußeren Zahnrad bringbar. Dies erfolgt nach einer bevorzugten Ausbildung durch lineares Verschieben des inneren Zahnrads entlang einer Achse, insbesondere der Drehachse, der Verstelleinrichtung aus der Wirkverbindung mit dem äußeren Zahnrad hinaus. Dies kann durch ein axiales Verschieben des inneren Zahnrads gegenüber dem vorzugsweise am Ort verbleibenden äußeren Zahnrad oder durch ein Verschieben des äußeren Zahnrades gegenüber dem vorzugsweise am Ort verbleibenden inneren Zahnrad geschehen. Die jeweilige Verschiebung der beiden Zahnräder relativ zueinander kann auch in einem Winkel vorzugsweise in einem rechten Winkel zu einer Achse der Verstelleinrichtung, insbesondere der Drehachse, erfolgen. Alternativ oder zusätzlich wird vorzugsweise der Außendurchmesser des inneren Zahnrads reduziert und/oder der Innendurchmesser des äußeren Zahnrades temporär erweitert. Dadurch geraten die beiden Zahnräder außer Eingriff und/oder eines der beiden Zahnräder kann relativ zu dem anderen radial verlagert werden, so dass es temporär außer Eingriff mit dem äußeren Zahnrad bringbar ist. Alle oben beschriebenen Maßnahmen dienen der Reduzierung des Verstellwiderstandes, so dass eine Schnellverstellung möglich ist.

Der Fachmann versteht, dass die jeweilige Maßnahme zur Reduzierung des Verstellwiderstandes nur temporär ist. Sobald das jeweilige Bauteil des Fahrzeugsitzes, insbesondere die Rückenlehne, nach der Schnellverstellung seine neue Stellung eingenommen hat, spätestens jedoch, wenn es mittels Schnellverstellung wieder in seine ursprüngliche Stellung zurückgestellt worden ist, wird die Reduzierung des Verstellwiderstandes wieder vollständig aufgehoben.

Eine Weiterbildung der vorliegenden Erfindung ist eine Verstelleinrichtung, bei der der Antrieb reibschlüssig mit einem Zahnrad zusammenwirkt, wobei die Höhe der Reibkraft, insbesondere zur temporären Reduzierung des Verstellwiderstandes, einstellbar ist.

Beispielsweise für die Komfortverstellung wird die Reibkraft so gewählt, dass das für die Verstellung eines Bauteils benötigte Drehmoment übertragen werden kann. Für eine Schnellverstellung wird die Reibkraft vorzugsweise auf einen möglichst geringen Wert reduziert.

Insbesondere für eine Schnellverstellung wird mindestens eines der oben genannten Bauteile von dem Bauteil, mit dem es zusammenwirkt, reversibel getrennt.

Eine Weiterbildung der vorliegenden Erfindung ist eine Verstelleinrichtung, die ein Bremsmittel aufweist, dessen Bremskraft auf mindestens zwei unterschiedliche Werte einstellbar ist und/oder bei der das Bremsmittel von der Verstellvorrichtung entkoppelbar ist.

Vorzugsweise kann die Bremskraft des Bremsmittels so eingestellt werden, dass sie die bei der Komfortverstellung und bei der Schnellverstellung jeweils gewünschte Bremskraft zur Verfügung stellen kann. Dabei wird die Bremskraft bei der Komfortverstellung vorzugsweise so eingestellt, dass sich die Lage des jeweiligen Bauteils, beispielsweise die Rückenlehne, nicht ungewollt verstellt. Bei der Schnellverstellung ist die Bremskraft vorzugsweise nahezu null oder gleich null.

Vorzugsweise ist die Reibung in der Verstelleinrichtung derart verringert, dass beim Entriegeln des Bremsmittels ein quasi reibfreies Verstellen des Fahrzeugsitzes möglich ist, wobei das Getriebe der Verstelleinrichtung entsprechend verdreht wird.

Eine Weiterbildung der vorliegenden Erfindung ist eine Verstelleinrichtung, die mindestens eine Achse, vorzugsweise eine Drehachse, aufweist und bei der mindestens ein Zahnrad, das Antriebmittel und/oder eine Bremseinheit entlang dieser Achse oder in einem Winkel zu dieser Achse, insbesondere zur temporären Reduzierung des Verstellwiderstandes, verstellbar vorgesehen ist.

Eine Weiterbildung der vorliegenden Erfindung ist eine Verstelleinrichtung bei der der Durchmesser mindestens eines Zahnrades, insbesondere zur temporären Reduzierung des Verstellwiderstandes, in seinem Durchmesser reversibel veränderbar ist.

Vorzugsweise ist der Durchmesser des inneren Zahnrades reduzierbar.

Besonders bevorzugt ist ein Zahnrad relativ zu dem anderen verschiebbar vorgesehen, insbesondere quer zu einer Achse, insbesondere der Drehachse eines der beiden Zahnräder, besonders bevorzugt nachdem der Durchmesser mindestens eines der beiden Zahnräder verändert worden ist. Besonders bevorzugt ist das innere Zahnrad in radialer Richtung relativ zu dem äußeren Zahnrad verschiebbar angeordnet und wird verschoben, nachdem der Durchmesser des inneren Zahnrades reduziert worden ist. Vorzugsweise weist mindestens eines der Zahnräder einen Spalt auf, der sich vorzugsweise in radialer Richtung erstreckt. Zum Reduzieren bzw. Erweitern des Durchmessers eines der Zahnräder, wird die Breite dieses Spaltes reversibel entweder verkleinert oder vergrößert.

Vorzugsweise ist das Antriebsmittel ein Exzenter, der besonders bevorzugt zwei Exzentersegmente aufweist. Der Exzenter wirkt vorzugsweise reibschlüssig mit dem inneren Zahnrad zusammen, wobei die Größe der Reibkraft besonders bevorzugt einstellbar ist.

Vorzugsweise handelt es sich bei der Verstelleinrichtung um einen Taumelrecliner, bei dem das innere Zahnrad vorzugsweise weniger Zähne aufweist als das äußere Zahnrad.

Ein weiterer, nicht beanspruchter Gegenstand der vorliegenden Erfindung ist ein Fahrzeugsitz aufweisend die erfindungsgemäße Verstelleinrichtung. Vorzugsweise dient die Verstelleinrichtung zur Einstellung der Neigung der Rückenlehne. Vorzugsweise ist jeweils eine erfindungsgemäße Verstelleinrichtung jeweils rechts und links von der Rückenlehne bzw. dem Sitzteil angeordnet und jeweils sowohl mit der Rückenlehne als auch mit dem Sitzteil verbunden.

Im Folgenden wird die Erfindung anhand der Figuren 1 - 4 erläutert. Diese Erläuterungen sind lediglich beispielhaft und schränken den allgemeinen Erfindungsgedanken nicht ein.
- Figur 1: zeigt den die erfindungsgemäße Verstelleinrichtung aufweisenden Fahrzeugsitz.
- Figuren 2 -4: zeigen jeweils eine Ausführungsform der erfindungsgemäßen Verstelleinrichtung.

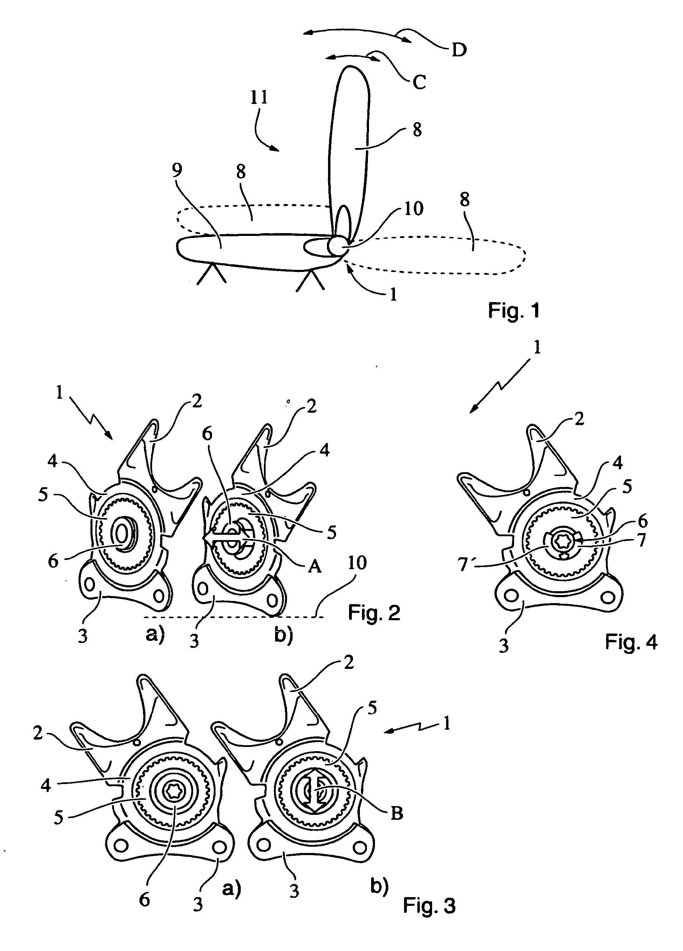

Figur 1 zeigt den die erfindungsgemäße Verstelleinrichtung aufweisenden Fahrzeugsitz 11, der ein Sitzteil 9 und eine Rückenlehne 8 aufweist. Die Rückenlehne ist schwenk- und/oder drehbar an dem Sitzteil 9 vorgesehen. Dafür ist zwischen der Rückenlehne 8 und dem Sitzteil 9, jeweils links und rechts eine Verstelleinrichtung 10, hier ein Taumelrecliner vorgesehen, mit dem der Winkel zwischen der Rückenlehne 8 und dem Sitzteil 9 zu Komfortzwecken, d.h. um den Fahrzeugsitz an die Physionomie des jeweiligen Sitzinsassen anzupassen und zur Schnellverstellung D veränderbar ist. Bei der Komfortverstellung C erfolgt die Winkelveränderung nur in einem kleinen Winkelbereich und vergleichsweise langsam. Die Schnellverstellung D wird vorzugsweise eingesetzt um den Winkel zwischen der Rückenlehne 8 und dem Sitzteil 9 schnell über einen großen Winkelbereich zu verändern, beispielsweise um die Rückenlehne gegen den Uhrzeigersinn in die gestrichelt dargestellte Verstauposition oder im Uhrzeigersinn in die gestrichelt dargestellte Schlafposition zu verstellen.
Figur 2a zeigt eine erste Ausführungsform der erfindungsgemäßen Verstelleinrichtung 1 mit einem ersten Beschlagteil 2 zur Befestigung an der Rückenlehne, einem zweiten Beschlagteil 3 zur Befestigung am Sitzteil, einem äußeren innenverzahnten Zahnrad 4, einem inneren außenverzahnten Zahnrad 5 und einem Antriebsmittel 6, hier einem Exzenter. Bei der Verstellvorrichtung handelt es sich in dem vorliegenden Fall um einen Taumelrecliner. Durch Drehen des Antriebsmittels 6 wird das innere Zahnrad 5 im größeren äußeren Zahnrad 4 abgewälzt und mit einer von der Differenz der Zähnezahl abhängigen Geschwindigkeit gegenüber dem äußeren Zahnrad verdreht. Da das innere Zahnrad 5 mit dem Beschlag 3 und das äußere Zahnrad 4 mit dem Beschlag 2 drehfest verbunden sind, wird ein Verdrehen der Rückenlehne relativ zum Sitzteil bewirkt. Diese Verdrehung ist normalerweise vergleichsweise langsam und eignet sich deshalb insbesondere für eine Komfortverstellung der Rückenlehne, bei der die Verstellung nur über einen vergleichsweise kleinen Winkelbereich erfolgt.

Wie aus Figur 2b ersichtlich, kann das Antriebsmittel 6 entlang einer Achse 10, vorzugsweise der Drehachse des inneren Zahnrades 5 und/oder des Beschlagteils 2, aus der kreisförmigen Ausnehmung im inneren Zahnrad 5 heraus bewegt werden (Pfeil A). Dadurch wird ein Form- und/oder Kraft-, insbesondere Reibschluss, zwischen dem Antriebsmittel 6 und dem inneren Zahnrad 5 zumindest teilweise aufgehoben, so dass ein zügiges Verstellen, eine Schnellverstellung der Rückenlehne gegenüber dem Sitzteil durch bloßes manuelles Verschwenken möglich wird.

Bei der Ausbildung nach Figur 3 ist das innere Zahnrad 5 derart kleiner als das äußere Zahnrad 4 ausgeführt, dass es aus seiner Eingriffstellung (Figur 2a) durch radiales Verlagern (Pfeil B) außer Eingriff mit dem äußeren Zahnrad gebracht werden kann (Figur 3b). Dadurch wird ein Form- und/oder Kraftschluss zwischen den beiden Zahnrädern 4, 5 aufgehoben, so dass ein zügiges Verstellen, eine Schnellverstellung, der Rückenlehne gegenüber dem Sitzteil durch bloßes manuelles Verschwenken möglich wird.

Bei der Ausbildung nach Figur 4 wird die Reibung zwischen dem Antriebsmittel 6, hier einem Exzenter, und dem inneren Zahnrad 5, beispielsweise durch ein Verstellen der räumlichen Ausdehnung des aus keilförmigen Segmenten 7, 7' zusammen gesetzten Exzenters erhöht oder reduziert. Vorzugsweise wird für eine Schnellverstellung die Reibung möglichst weitgehend reduziert, so dass ein zügiges Verstellen, eine Schnellverstellung der Rückenlehne gegenüber dem Sitzteil durch bloßes manuelles Verschwenken möglich wird.

### Bezugszeichenliste

- 1: Verstelleinrichtung, Taumel-Getriebe
- 2: Beschlagteil
- 3: Beschlagteil
- 4: Zahnrad (außen, innenverzahnt)
- 5: Zahnrad (innen, außenverzahnt)
- 6: Antriebsmittel, Exzenter
- 7, 7': Exzentersegmente
- 8: Rückenlehne
- 9: Sitzteil
- 10: Achse, Drehachse
- 11: Fahrzeugsitz
- A: Pfeil (axiale Verschiebung)
- B: Pfeil (radiale Verschiebung)
- C: Komfortverstellung
- D: Schnellverstellung

## Patentansprüche

1. Verstelleinrichtung (1) für einen Fahrzeugsitz, insbesondere zum Verstellen der Neigung der Rückenlehne (8) relativ zu einem Sitzteil (9), mit einem innenverzahnten äußeren Zahnrad (4), einem außenverzahnten inneren Zahnrad (5) und einem Antriebsmittel (6), das zur Komfortverstellung (C) ein Zahnrad (4, 5) relativ zu dem anderen Zahnrad (4, 5) gegen einen Verstellwiderstand dreht, wobei der Verstellwiderstand für eine Schnellverstellung (D) temporär reduzierbar ist, **dadurch gekennzeichnet, dass** das Antriebsmittel (6) form- und/oder kraftschlüssig, insbesondere reibschlüssig, mit einem der Zahnräder (4, 5) drehmomentübertragend zusammenwirkt, wobei der Form- und/oder Kraftschluss, insbesondere der Reibschluss, für die Schnellverstellung zumindest reduzierbar ist bzw. das
das Zahnrad (4, 5), das Antriebsmittel und/oder ein Bremsmittel von einem Bauteil der Verstelleinrichtung mit dem es (4,5), insbesondere zur Komfortverstellung, in Eingriff steht, reversibel trennbar vorgesehen ist.

2. Verstelleinrichtung nach Anspruch 1, **dadurch gekennzeichnet, dass** der Antrieb reibschlüssig mit einem Zahnrad (4, 5) zusammenwirkt, wobei die Höhe der Reibkraft einstellbar ist.

3. Verstelleinrichtung (1) nach Anspruch 1 oder 2, **dadurch gekennzeichnet, dass** sie ein Bremsmittel aufweist, dessen Bremskraft zwischen mindestens zwei Werten einstellbar ist und/oder bei der das Bremsmittel von der Verstellvorrichtung entkoppelbar ist.

4. Verstelleinrichtung (1) nach einem der voranstehenden Ansprüche, **dadurch gekennzeichnet, dass** sie mindestens eine Achse (10), vorzugsweise eine Drehachse aufweist und dass mindestens ein Zahnrad (4, 5), das Antriebmittel (6) und/oder eine Bremseinheit entlang dieser Achse (10) oder in einem Winkel zu dieser Achse, insbesondere zur Reduzierung des Verstellwiderstands, verstellbar vorgesehen ist.

5. Verstelleinrichtung (1) nach einem der Ansprüche 1 bis 3, **dadurch gekennzeichnet, dass** der Durchmesser mindestens eines Zahnrades (4, 5), insbesondere zur Reduzierung des Verstellwiderstandes, in seinem Durchmesser reversibel veränderbar ist.

6. Verstelleinrichtung nach einem der Ansprüche 1 bis 3, **dadurch gekennzeichnet, dass** das Antriebsmittel (6) ein Exzenter ist.

7. Verstelleinrichtung nach einem der voranstehenden Ansprüche, **dadurch gekennzeichnet, dass** sie ein Taumelrecliner ist.

8. Verstelleinrichtung nach einem der voranstehenden Ansprüche, **dadurch gekennzeichnet, dass** das innere Zahnrad (5) weniger Zähne aufweist als das äußere Zahnrad (4).

## Claims

1. Adjustment device (1) for a vehicle seat, in particular for adjusting the inclination of the backrest (8) relative to a seat part (9), with an internally toothed, outer gearwheel (4), an externally toothed, inner gearwheel (5) and a driving means (6) which, for the comfort adjustment (C), rotates one gearwheel (4, 5) relative to the other gearwheel (4, 5) counter to an adjustment resistance, wherein the adjustment resistance is temporarily reducible for a rapid adjustment (D), **characterized in that** the driving means (6) interacts in an interlocking and/or non-positive manner, in particular in a frictional manner, with one of the gearwheels (4, 5) so as to transmit torque thereto, wherein the interlocking and/or non-positive connection, in particular the frictional connection, is at least reducible for the rapid adjustment, or the gearwheel (4, 5), the driving means and/or a braking means is provided so as to be reversibly separable from a component of the adjustment device, with which it (4, 5) is in engagement, in particular for the comfort adjustment.

2. Adjustment device according to Claim 1, **characterized in that** the drive interacts in a frictional manner with a gearwheel (4, 5), wherein the level of the frictional force can be adjusted.

3. Adjustment device (1) according to Claim 1 or 2, **characterized in that** it has a braking means, the braking force of which can be adjusted between at least two values, and/or in which the braking means can be decoupled from the adjustment device.

4. Adjustment device (1) according to one of the preceding claims, **characterized in that** it has at least one axis (10), preferably an axis of rotation, and **in that** at least one gearwheel (4, 5), the driving means (6) and/or a braking unit are/is provided adjustably along said axis (10) or at an angle to said axis, in particular for reducing the adjustment resistance.

5. Adjustment device (1) according to one of Claims 1 to 3, **characterized in that** the diameter of at least one gearwheel (4, 5) is reversibly changeable in terms of the diameter thereof, in particular for reducing the adjustment resistance.

6. Adjustment device according to one of Claims 1 to 3, **characterized in that** the driving means (6) is an eccentric.

7. Adjustment device according to one of the preceding claims, **characterized in that** it is a tumbling recliner.

8. Adjustment device according to one of the preceding claims, **characterized in that** the inner gearwheel (5) has fewer teeth than the outer gearwheel (4).

## Revendications

1. Dispositif de réglage (1) pour un siège de véhicule, en particulier pour le réglage de l'inclinaison du dossier (8) par rapport à une partie d'assise (9), avec une roue dentée extérieure (4) à denture intérieure, une roue dentée intérieure (5) à denture extérieure et un moyen d'entraînement (6) qui, pour le réglage de confort (C), fait tourner une roue dentée (4, 5) par rapport à l'autre roue dentée (4, 5) contre une résistance de réglage, dans lequel la résistance de réglage peut être temporairement réduite pour un réglage rapide (D), **caractérisé en ce que** le moyen d'entraînement (6) coopère, par complémentarité de forme et/ou de force, en particulier par friction, avec une des roues dentées (4, 5) en transmettant un couple de rotation, dans lequel la liaison par complémentarité de forme et/ou de force, en particulier par friction, peut être au moins réduite pour le réglage rapide, ou la roue dentée (4, 5), le moyen d'entraînement et/ou un moyen de freinage est prévu séparable de façon réversible d'un composant du dispositif de réglage avec lequel elle (4, 5) est en prise, en particulier pour le réglage de confort.

2. Dispositif de réglage selon la revendication 1, **caractérisé en ce que** l'entraînement coopère par friction avec une roue dentée (4, 5), dans lequel le niveau de la force de friction est réglable.

3. Dispositif de réglage (1) selon la revendication 1 ou 2, **caractérisé en ce qu'**il présente un moyen de freinage, dont la force de freinage est réglable entre au moins deux valeurs et/ou dans lequel le moyen de freinage peut être découplé du dispositif de réglage.

4. Dispositif de réglage (1) selon l'une quelconque des revendications précédentes, **caractérisé en ce qu'**il présente au moins un axe (10), de préférence un axe de rotation, et **en ce qu'**au moins une roue dentée (4, 5), le moyen d'entraînement (6) et/ou une unité de freinage est prévu réglable le long de cet axe (10) ou sous un angle par rapport à cet axe, en particulier pour la réduction de la résistance de réglage.

5. Dispositif de réglage (1) selon l'une quelconque des revendications 1 à 3, **caractérisé en ce que** le diamètre d'au moins une roue dentée (4, 5) peut être modifié de façon réversible en son diamètre, en particulier pour la réduction de la résistance de réglage.

6. Dispositif de réglage selon l'une quelconque des revendications 1 à 3, **caractérisé en ce que** le moyen d'entraînement (6) est un excentrique.

7. Dispositif de réglage selon l'une quelconque des revendications précédentes, **caractérisé en ce qu'**il est un siège inclinable oscillant.

8. Dispositif de réglage selon l'une quelconque des revendications précédentes, **caractérisé en ce que** la roue dentée intérieure (5) présente moins de dents que la roue dentée extérieure (4).
